Europäisches Patentamt

European Patent Office

Office européen des brevets

(19)

(11) Veröffentlichungsnummer : **0 430 945 B1**

(12) **EUROPÄISCHE PATENTSCHRIFT**

(45) Veröffentlichungstag der Patentschrift :
**11.03.92 Patentblatt 92/11**

(51) Int. Cl.$^5$ : **B01J 35/04, F01N 3/28**

(21) Anmeldenummer : **89903720.4**

(22) Anmeldetag : **22.03.89**

(86) Internationale Anmeldenummer :
**PCT/EP89/00311**

(87) Internationale Veröffentlichungsnummer :
**WO 90/03220 05.04.90 Gazette 90/08**

(54) **WABENKÖRPER, INSBESONDERE KATALYSATOR-TRÄGERKÖRPER, AUS EINER MEHRZAHL VERSCHLUNGENER BLECHSTAPEL.**

(30) Priorität : **22.09.88 DE 3832243**

(43) Veröffentlichungstag der Anmeldung :
**12.06.91 Patentblatt 91/24**

(45) Bekanntmachung des Hinweises auf die
Patenterteilung :
**11.03.92 Patentblatt 92/11**

(84) Benannte Vertragsstaaten :
**AT BE CH DE FR GB IT LI LU NL SE**

(56) Entgegenhaltungen :
**EP-A- 0 245 737**
**US-A- 3 890 104**

(73) Patentinhaber : **Emitec Gesellschaft für
Emissionstechnologie mbH
Hauptstrasse 150
W-5204 Lohmar 1 (DE)**

(72) Erfinder : **MAUS, Wolfgang
Gut Horst
W-5060 Bergisch Gladbach 1 (DE)**
Erfinder : **WIERES, Ludwig
Oppelner Str. 2
W-5063 Overath 1 (DE)**

(74) Vertreter : **Fuchs, Franz-Josef, Dr.-Ing. et al
Postfach 22 13 17
W-8000 München 22 (DE)**

EP 0 430 945 B1

## Beschreibung

Die vorliegende Erfindung betrifft einen Wabenkörper, insbesondere einen Katalysator-Trägerkörper, welcher aus zumindest teilweise strukturierten Blechen aufgebaut ist und viele, für ein Fluid durchlässige Kanäle aufweist.

Aus der EP-A-0 245 736 ist ein Wabenkörper bekannt, bei welchem die einzelnen Blechlagen im Außenbereich evolventenförmig verlaufen, was bei thermischen Wechselbelastungen und sonstigen Beanspruchungen große Vorteile bezüglich der Haltbarkeit mitsichbringt. Aus der EP-A-0 245 737 ist weiter ein Wabenkörper bekannt, welcher aus einem Stapel gegensinnig verschlungener Bleche besteht, eine Bauform, die ebenfalls eine große Haltbarkeit gegenüber thermischen Wechselbelastungen hat. Diese Form läßt sich zwar einfach herstellen, jedoch ist sie in ihrem Aufbau nicht ganz symmetrisch, was bei einzelnen Fertigungsschritten und bei der Weiterverarbeitung berücksichtigt werden muß, und eignet sich nicht in allen Fällen für eine flexible und kostengünstige Fertigung von Sonderquerschnitten und unregelmäßigen Querschnittsformen.

Die in der EP-A-0 245 736 beschriebene Form ist zwar in ihrem äußeren Bereich symmetrisch, jedoch ist die Gestaltung des Zentralbereiches und eine entsprechende Fertigung verhältnismäßig aufwendig.

Aufgabe der vorliegenden Erfindung ist die Schaffung eines Wabenkörpers, welcher bei regelmäßigen Querschnittsformen weitgehend symmetrisch aufgebaut, aber leicht herzustellen ist, wobei gleichzeitig die hervorragenden Eigenschaften gegenüber thermischer Wechselbelastung und anderen Beanspruchungen erhalten bleiben sollen. Außerdem soll der prinzipielle Aufbau des Wabenkörpers auch die kostengünstige Herstellung von Körpern mit Sonderquerschnitten, insbesondere mit unregelmäßigen Querschnittsformen, ermöglichen.

Diese Aufgabe wird durch einen Wabenkörper gemäß dem Anspruch 1 gelöst. Dieser Wabenkörper mit einer Vielzahl von für ein Fluid durchlässigen Kanälen, der insbesondere als Katalysator-Trägerkörper oder für andere Anwendungen in strömenden Medien geeignet ist, besteht aus einer Vielzahl von zumindest teilweise strukturierten Blechen, die in einem Mantel angeordnet sind. Für die vorliegende Erfindung kommt es nicht darauf an, welche Strukturen die einzelnen Bleche haben, solange nur geeignete Strömungskanäle für ein Fluid entstehen. Im allgemeinen werden für solche Wabenkörper abwechselnd geschichtete glatte und gewellte Bleche verwendet, jedoch läßt sich die Erfindung auch auf anders strukturierte Bleche in gleicher Weise anwenden und erstreckt sich auch auf diese Anwendungsfälle. Insbesondere können beispielsweise auch schräg oder pfeilförmig gewellte Bleche, wie sie aus dem Stand der Technik bekannt sind, Verwendung finden. Auch quer oder schräg zur Strömungsrichtung liegende Strukturen der Bleche oder Bleche mit Spalten bzw. Löchern können Anwendung finden. Jedenfalls besteht ein erfindungsgemäßer Wabenkörper aus mindestens drei Stapeln von Blechen, von denen mindestens drei um je eine Knicklinie im Zentralbereich des Wabenkörpers gefaltet und in gefaltetem Zustand gleichsinnig umeinander und um den Zentralbereich mit den Knicklinien verschlungen sind. Ein solcher Aufbau vermeidet nahezu alle Nachteile, die sich bei bisher bekannten Wabenkörpern ergaben und vereinigt viele Vorteile. Für regelmäßige Querschnitte, z. B. Kreis oder regelmäßiges Vieleck, läßt sich ein sehr symmetrischer Aufbau verwirklichen und bei geeigneter Wahl der Anzahl der Stapel auch erreichen, daß alle Bleche gleich lang sein können und alle Stapel aus der gleichen Anzahl Bleche bestehen. Dies vereinfacht und verbilligt den Fertigungsablauf und führt außerdem zu kleinen Fertigungstoleranzen, insbesondere in bezug auf eventuelle Verformungen des Mantels. Oer neue Aufbau schränkt dabei die Anwendung bekannter, vorteilhafter Maßnahmen zur Verbesserung der Eigenschaften des Wabenkörpers nicht ein, sondern begünstigt diese teilweise sogar. Sämtliche bekannten Fügetechniken, wie Hartlöten, Schweißen, Sintern oder dergleichen, können auch bei dem vorliegenden Aufbau angewendet werden. Auch formschlüssige Verbindungen der Bleche untereinander und/oder mit dem Mantel sind möglich. Falls sinnvoll, können auch Formen mit einer im Längsschnitt etwa konischen oder rundkonischen Stirnseite verwirklicht werden, indem durch Herausschieben des Zentralbereiches eines solchen Wabenkörpers ein sogenanntes Teleskopieren bewirkt wird. Insgesamt vereinigt die vorliegende Erfindung bezüglich der Variabilität in der Herstellung und bezüglich des Verhaltens bei thermischer Wechselbelastung die Vorteile der in der EP-A-0 245 737 und der EP-A-0 245 738 beschriebenen Ausführundsformen in wesentlichen Punkten.

Bei Verwendung von vier oder mehr gefalteten verschlungenen Stapeln können auch sehr komplizierte Querschnitte gut ausgefüllt werden, wie anhand der Zeichnung noch näher erläutert wird.

Der grundsätzliche Aufbau des Wabenkörpers und seine Eigenschaften bleiben auch dann erhalten, wenn ein durch den Zentralbereich des Wabenkörpers verlaufender Stapel nicht gefaltet ist, seine Enden jedoch mit den gefalteten Stapeln gemeinsam verschlungen sind. Dieser eine Stapel nimmt dann ungefähr die Form eines S an, in dessen Rundungen die Knicklinien der übrigen Stapel liegen.

Im einfachsten Falle kann ein erfindungsgemäßer Wabenkörper aus abwechselnden Lagen glatter und gewellter Bleche bestehen, wobei diese Bleche untereinander und/oder mit dem Mantel zumindest an einem Teil der Berührungslinien fügetechnisch verbunden sein können, vorzugsweise durch Hartlöten. Eine Befestigung der Enden der Bleche am Mantel reicht für viele Anwendungen aus. Die Wabenkörper können jedoch auch in einen schmalen Umfangsbereich oder in einzelnen Zonen oder auch insgesamt an einer oder beiden Stirnseiten bis zu einer Tiefe von einigen Millimetern verlötet sein.

Wie anhand der Zeichnung näher erläutert wird, ermöglicht die vorliegende Erfindung auf besonders einfache Weise die Ausfüllung von regelmäßigen Querschnitten mit strukturierten Blechen. Viele regelmäßige Querschnitte, z. B. Sechsecke, lassen sich überraschenderweise durch gleich hohe Stapel gleich langer Bleche ausfüllen, was die Fertigung extrem vereinfacht. Unter der Länge eines Bleches wird im vorliegenden Falle bei strukturierten Blechen, nicht die ursprüngliche Länge, sondern die Länge nach Fertigstellung der Struktur verstanden. Bei der Herstellung regelmäßiger Formen aus Stapeln gleich langer Bleche können diese allerdings nicht immer alle in der Mitte gefaltet werden. Eine seitliche Verschiebung der einzelnen Bleche in jedem Stapel kann notwendig werden, so daß der Stapel vor dem Falten einen etwa parallelogrammförmigen Querschnitt aufweist.

Auch besonders unregelmäßige Querschnittsformen, wie sie anhand der Zeichnung noch erläutert werden, lassen sich mit dem erfindungsgemäßen Aufbau eines Wabenkörpers verwirklichen. Da sowohl die Höhe jedes Stapels wie auch die Länge jedes einzelnen Bleches in jedem Stapel grundsätzlich frei wählbar ist und unterschiedlich lange Bleche auch noch unterschiedlich seitlich versetzt in einem Stapel angeordnet werden können, bietet der erfindungsgemäße Aufbau eine sehr große Variationsbreite zur gleichmäßigen Ausfüllung von unterschiedlichsten Querschnittsformen. Für fast jede gewünschte Querschnittsform kann durch fachmännisches Ausprobieren, ggf. mit Unterstützung eines Rechners, eine geeignete Anordnung von Stapeln mit ihren Knicklinien gefunden werden.

Ein weiterer Vorteil der erfindungsgemäßen Wabenkörper, zumindest bei runden Querschnitten besteht darin, daß der Mantel auf dem gesamten Umfang gleichmäßig belastet wird, so daß er keine eigene Stabilität gegen Verformung aufweisen muß. Es ist daher möglich, den Mantel in diesen Fällen aus sehr dünnen Blechen herzustellen, beispielsweise mit einer Dicke von nur 0,1 bis 1,5 mm, vorzugsweise etwa 1 mm oder weniger.

Auch eine als vorteilhaft bekannte Maßnahme, nämlich die Anordnung von einzelnen dickeren Blechlagen zwischen den übrigen Blechen läßt sich problemlos verwirklichen. Dabei kann in an sich bekannter Weise für diese Blechlagen entweder dickeres Blech verwendet werden oder eine mehrschichtige Anordnung gleichstrukturierter dünner Bleche. Dabei können solche dickeren Blechlagen grundsätzlich sowohl im Inneren wie auch an den Ober- bzw. Unterseiten der einzelnen Stapel angeordnet sein. Auch können die Stapel an ihren Außenseiten jeweils aus glatten oder strukturierten Blechen bestehen, je nachdem, welche Konstellatinn sich bei der Fertigung oder dem entstehenden Körper als günstiger erweist. Bevorzugt wird man sich bemühen, im entstehenden Körper immer abwechselnd glatte und gewellte Blechlagen aufeinander liegen zu lassen, so daß im Außenbereich des Körpers die Grenze zwischen einzelnen Stapeln nicht mehr erkennbar wird. Es schadet jedoch wegen der geringen Dicke der Blechlagen, z. B. 0,03 bis 0,06 mm, nicht, wenn beispielsweise zwei glatte Blechlagen an der Grenze von zwei Stapeln aneinanderliegen. Im Idealfall kann man jedoch die Zugehörigkeit einer Blechlage zu einem Stapel im Außenbereich des Wabenkörpers nicht erkennen und diese daher nur anhand der Knicklinie, um welche diese Blechlage gefaltet ist, feststellen.

Im Anspruch 12 wird ein Verfahren zur Herstellung von solchen Wabenkörpern beschrieben. Danach wird eine Mehrzahl von Stapeln aus jeweils einer Mehrzahl von zumindest teilweise strukturierten Blechen geschichtet, jeder Stapel wird um je eine Knicklinie gefaltet und gleichzeitig oder anschließend mit seiner Faltungskante zu einem Zentralbereich hinbewegt. Die Enden der gefalteten Stapel werden gleichsinnig umeinandergeschlungen, was z. B. durch Drehen des Zentralbereiches und Zusammenziehen eines die Stapel umgebenden Formkörpers erfolgen kann. Schließlich werden die so verschlungenen Stapel in einen vorgefertigten Mantel geschoben bzw. mit einem Mantel umgeben.

Gemäß den abhängigen Ansprüchen 13 und 14 ist es dabei möglich, Stapel mit unterschiedlicher Höhe und/oder unterschiedlicher Länge der Bleche zu verwenden, wobei zusätzlich die Bleche in einem Stapel auch noch seitlich gegeneinander verschoben sein können.

Vorteilhaft bei dem beschriebenen Herstellungsverfahren ist es, daß zur Erhöhung der Fertigungsgeschwindigkeit drei oder mehr Stapel gleichzeitig von unterschiedlichen Stapelvorrichtungen hergestellt und dann zu einem Zentralbereich hin zusammengeführt werden können. Gegenüber der Herstellung eines Wabenkörpers aus nur einem Stapel kann die Herstellungszeit so verringert werden.

Ausführungsbeispiele der Erfindung und der zugehörige Entstehungsprozeß sind jeweils im Querschnitt schematisch in der Zeichnung dargestellt, und zwar zeigen

Figur 1 einen Querschnitt durch einen erfindungsgemäßen Wabenkörper,

Figur 2 eine Veranschaulichung des Herstellungsverfahrens,

Figur 3 einen erfindungsgemäßen Wabenkörper mit sechseckigem Querschnitt,

Figuren 4 und 5 Wabenkörper mit unregelmäßigen Querschnitten,

Figur 6 einen aus vier Stapeln hergestellten runden Wabenkörper,

Figuren 7 und 8 Wabenkörper mit regelmäßigen Querschnitten, wie sie durch Aufblähen eines Quadrates bzw. Dreiecks entstehen,

Figur 9 einen Wabenkörper mit gleichem Querschnitt wie in Figur 8, jedoch ausgefüllt unter Verwendung eines zusätzlichen, nicht gefalteten Stapels.

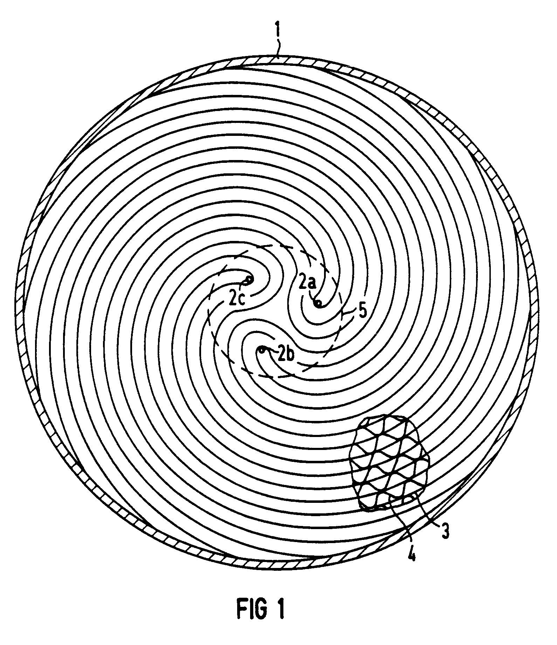

Figur 1 zeigt im Querschnitt einen aus glatten 3 und gewellten 4 Blechen aufgebauten Wabenkörper, der in einem mantel 1 angeordnet ist. Im Außenbereich des Wabenkörpers verlaufen die einzelnen Blechlagen etwa evolventenförmig, während in seinem Inneren Knicklinien 2a, 2b, 2c, im vorliegenden Ausführungsbeispiel drei, vorhanden sind. Um diese Knicklinien 2a, 2b, 2c sind jeweils ein Drittel der in dem Wabenkörper enthaltenen Blechlagen gefaltet und im Außenbereich dann in diesem gefalteten Zustand umeinander gleichsinnig verschlungen.

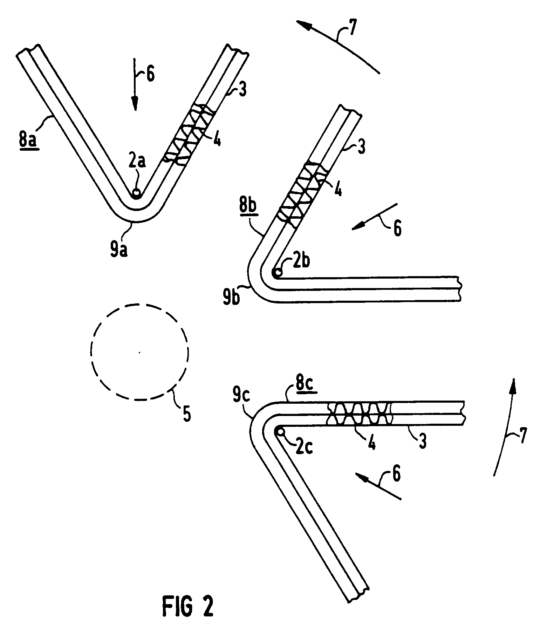

Die Entstehung eines erfindungsgemäßen Wabenkörpers ist anhand der Figur 2 schematisch veranschaulicht. Eine Mehrzahl von Blechstapeln 8a, 8b, 8c, von denen hier nur drei dargestellt sind, werden jeweils um eine Knicklinie 2a, 2b bzw. 2c gefaltet. Anschließend, oder vorzugsweise sogar gleichzeitig, werden die entstehenden Faltungskanten 9a, 9b, 9c auf einen gemeinsamen Zentralbereich 5 hinbewegt, wie durch die Pfeile 6 angedeutet ist. In ihrer Endlage, im Zentralbereich 5, stoßen die einzelnen Blechstapel 8a, 8b, 8c aneinander. Wie durch Pfeile 7 angedeutet ist, können nun die Enden der gefalteten Stapel 8a, 8b, 8c gleichsinnig umeinandergeschlungen werden. Dies kann durch Drehen des Zentralbereiches, z. B. mit einer gabelähnlichen Vorrichtung, und Zusammenziehen einer umgebenden Form und/oder durch Festhalten des Zentralbereiches und Drehen einer sich zusammenziehenden umgebenden Form geschehen. Auch andere Möglichkeiten sind denkbar. Insbesondere können die Knicklinien 2a, 2b, 2c durch gabelähnliche Werkzeuge gebildet werden, die dann auch das Verschlingen der Stapel durch Drehen bewerkstelligen.

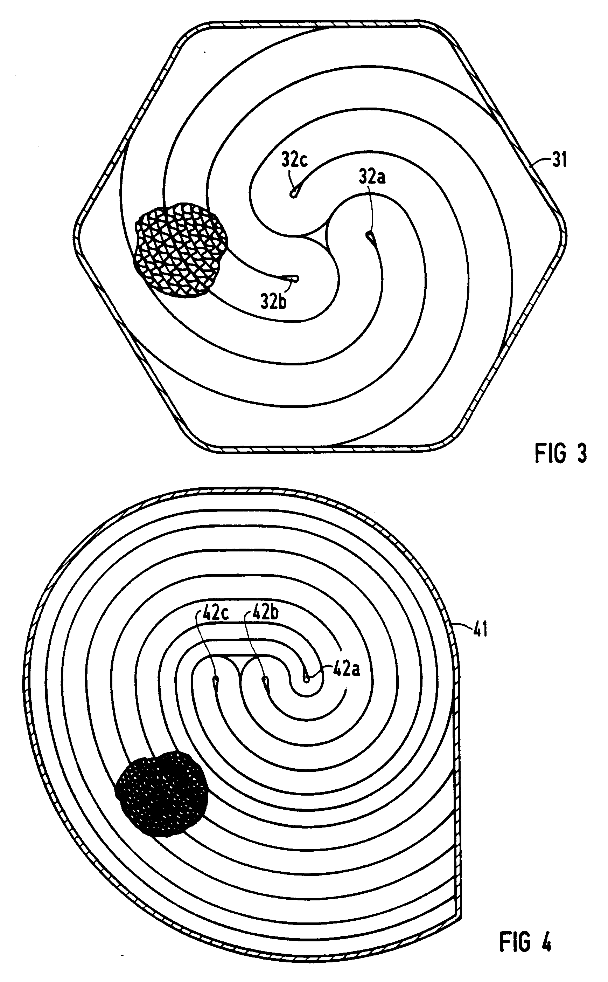

Figur 3 veranschaulicht, auf welche Weise ein regelmäßiges Sechseck vorteilhaft mit Blechstapeln ausgefüllt werden kann. Innerhalb des Mantels 31 sind drei Stapel angeordnet, welche um die Knicklinien 32a, 32b, 32c gefaltet sind. Vorteilhafterweise sollte die Zahl der zur Ausfüllung eines regelmäßinen Vielecks verwendeten Stapel gleich der Zahl der Ecken oder halb so groß sein. Dadurch läßt sich ein Aufbau aus gleich hohen Stapeln mit gleich langen Blechen erreichen. Variiert werden kann prinzipiell noch die Lage der Knicklinien in bezug auf die Ecken, wobei sich als vorteilhaft erwiesen hat, bei geradzahligen Vielecken die Knicklinien auf den Verbindungsebenen von gegenüberliegenden Kanten des Mantels anzuordnen.

Figur 4 zeigt eine unregelmäßige Querschnittsform eines Wabenkörpers, welche an die Form eines Schneckenhauses erinnert. Der Mantel 41 kann hierbei besonders günstig ausgefüllt werden, wenn einer der drei Stapel, nämlich der um die Knicklinie 42a gefaltete eine geringere Höhe aufweist als die beiden anderen, um die Knicklinien 42b, 42c gefalteten Stapel. Die drei Knicklinien 42a, 42b, 42c liegen dabei etwa in einer Ebene.

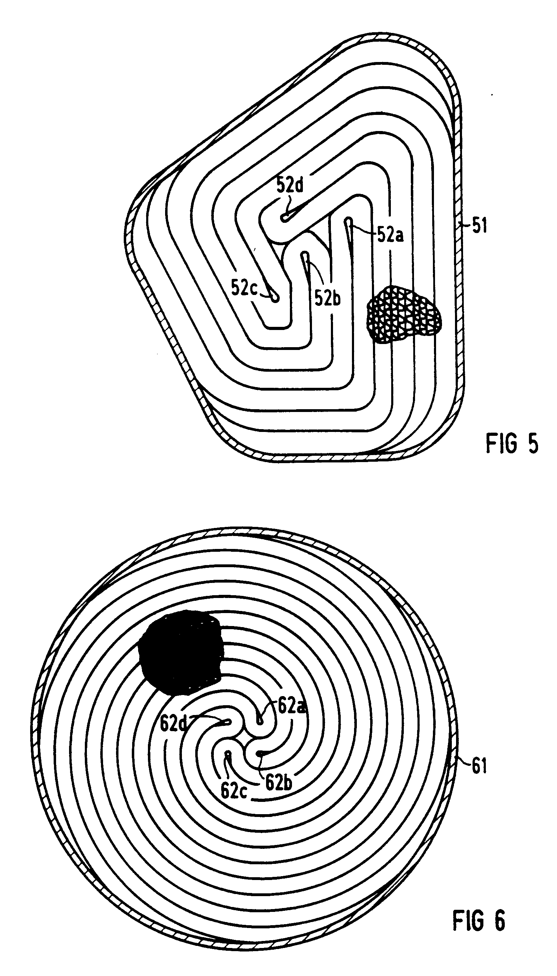

Figur 5 zeigt eine noch unregelmäßigere Querschnittsform des Mantels 51 und eine der Möglichkeiten, diese Form durch vier Stapel auszufüllen. Die Knicklinien 52a, b, c, d sind unregelmäßig im Zentralbereich des Wabenkörpers angeordnet, wobei diese Anordnung durch Berechnung oder systematische Versuche optimiert werden kann. Zu erwähnen ist dabei, daß die in den Zeichnungen übrigbleibenden kleinen Leerräume bei der tatsächlichen Herstellung fast vollständig verschwinden, da die Blechstapel und Blechlagen dazu neigen, solche Leerräume durch Verformung auszufüllen.

Figur 6 zeigt eine sehr symmetrische Anordnung eines runden Mantels 61, der mit vier um die Knicklinien 62a, b, c, d gefalteten Stapel von Blechen ausgefüllt ist.

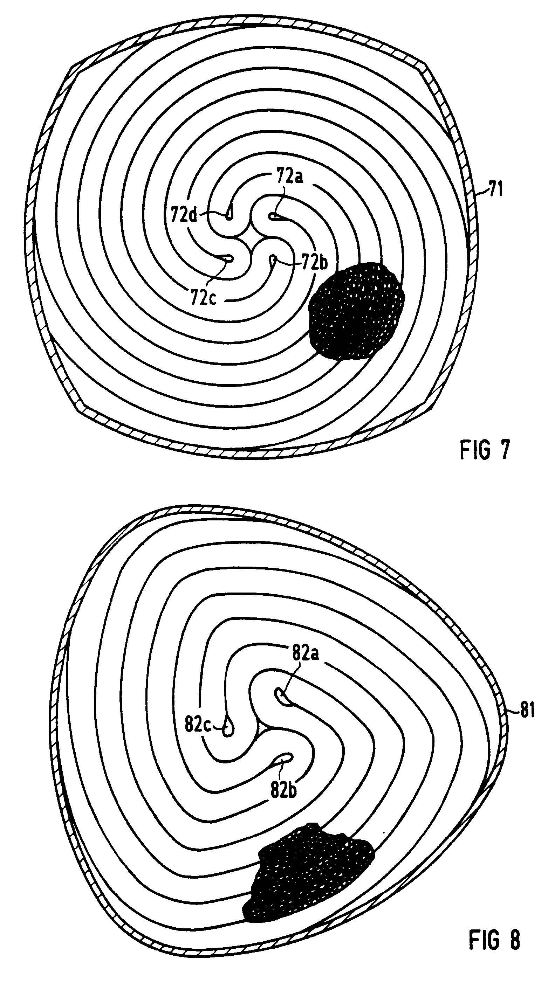

Die Figur 7 zeigt ein Mantelrohr 71 in Form eines aufgeblähten Quadrates, das sich ebenfalls problemlos durch vier um die Knicklinien 72a, b, c, d gefaltete Blechstapel ausfüllen läßt.

Figur 8 zeigt einen Mantel 81 mit der Form eines aufgeblähten Dreiecks, welcher durch drei um die Knicklinien 82a, b, c gefalteten Blechstapel ausgefüllt ist. Hier liegen die Knicklinien 82a, b, c jeweils in bezug auf die Mittellinie des Körpers auf den jeder Kante des Körpers entgegengesetzten Seiten. Diese Anordnung ist generell für regelmäßige ungeradzahlige Vielecke und die daraus durch Aufblähen entstehenden Querschnittsformen geeignet.

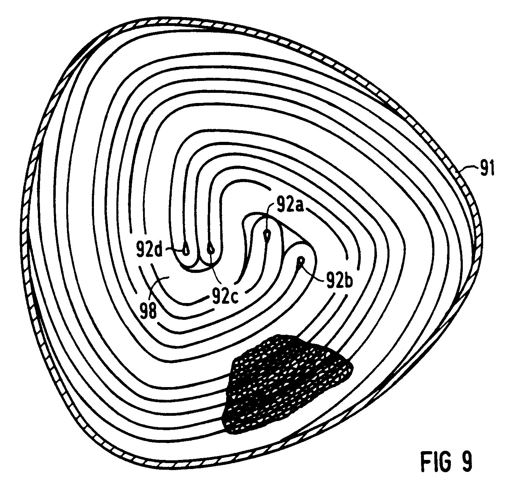

Figur 9 zeigt beispielhaft, auf welche Weise ein nicht gefalteter Stapel 98 bei erfindungsgemäß aufgebauten Wabenkörpern integriert werden kann. Im vorliegenden Fall hat der Mantel 91 die gleiche Form wie in Figur 8, wird jedoch durch vier um die Knicklinien 92a, b, c, d gefaltete und einen nicht gefalteten Stapel 98 ausgefüllt. Man erkennt, daß ein nicht gefalteter Stapel 98 in einer solchen Anordnung immer durch zwei gefaltete im Zentralbereich mit ihren Faltungskanten aufeinanderstoßende Stapel ersetzt werden könnte. Man kann jedoch bei Wabenkörpern die eigentlich aus fünf oder mehr Stapeln hergestellt werden sollen immer zwei gefaltete Stapel durch einen doppelt so dicken nicht gefalteten Stapel ersetzen. Dies ändert an den prinzipiellen Vorteilen des Aufbaus nichts, sondern ist lediglich eine Frage der Fertigungstechnik.

Die vorliegende Erfindung eignet sich besonders für thermisch hochbelastete Katalysator-Trägerkörper bei Kraftfahrzeugen, ist jedoch nicht auf dieses Anwendungsgebiet beschränkt, da solche Wabenkörper auch auf

EP 0 430 945 B1

anderen Gebieten, beispielsweise der Behandlung von strömenden Fluiden, Anwendung finden.

**Patentansprüche**

1. wabenkörper mit einer Vielzahl von für ein Fluid durchlässigen Kanälen, insbesondere Katalysator-Trägerkörper, aus einer Vielzahl von zumindest teilweise strukturierten Blechen (3, 4), die in einem Mantel (1; 31; 41; 51; 61; 71; 81; 91) angeordnet sind, **dadurch gekennzeichnet**, daß der wabenkörper mindestens drei Stapel (8a, 8b, 8c, ...) von blechen (3, 4) enthält, wobei mindestens drei der Stapel (8a, 8b, 8c, ...) je um je eine zugehörige Knicklinie (2a, b, c; 32a, b, c; 42a, b, c; 52a, b, c, d; 62a, b, c, d; 72a, b, c, d; 82a, b, c; 92a, b, c, d) im Zentralbereich (5) des wabenkörpers gefaltet und in gefaltetem Zustand gleichsinnig umeinander und um den Zentralbereich (5) mit den Knicklinien (2a, b, c; 32a, b, c; 42a, b, c; 52a, b, c, d; 62a, b, c, d; 72a, b, c, d; 82a, b, c; 92a, b, c, d) verschlungen sind.

2. Wabenkörper nach Anspruch 1, **dadurch gekennzeichnet**, daß der Wabenkörper vier oder mehr gefaltete, verschlungene Stapel (8a, 8b, 8c, ...) enthält.

3. Wabenkörper nach Anspruch 1, **dadurch gekennzeichnet**, daß zusätzlich zu den gefalteten Stapeln ein nicht gefalteter, durch den Zentralbereich des wabenkörpers verlaufender Stapel (92) von Blechen vorhanden und gemeinsam mit den gefalteten Stapeln verschlungen ist.

4. wabenkörper nach Anspruch 1, 2 oder 3, **dadurch gekennzeichnet**, daß jeder Stapel (8a, 8b, 8c, ...) aus abwechselnd angeordneten, im wesentlichen glatten (3) und gewellten (4) Blechen besteht.

5. wabenkörper nach Anspruch 1, 2, 3 oder 4, **dadurch gekennzeichnet**, daß die Bleche (3, 4) untereinander und/oder mit dem Mantel (1; 31; 41; 51; 61; 71; 81; 91) zumindest an einem Teil der Berührungslinien fügetechnisch verbunden sind, vorzugsweise durch Hartlöten.

6. Wabenkörper nach einem der vorhergehenden Ansprüche, **dadurch gekennzeichnet**, daß die Berührungslinien der Bleche alle oder teilweise an einer oder beiden Stirnseiten des wabenkörpers bis zu einer Tiefe von einigen Millimetern verlötet sind.

7. Wabenkörper nach einem der vorhergehenden Ansprüche, **dadurch gekennzeichnet**, daß der Mantel (31) im Querschnitt etwa die Form eines regelmäßigen Vielecks, vorzugsweise eines Sechsecks aufweist.

8. Wabenkörper nach einem der vorhergehenden Ansprüche, **dadurch gekennzeichnet**, daß alle Bleche etwa gleich lang, aber zumindest teilweise mit unterschiedlichem Abstand von ihrer Mitte gefaltet sind.

9. Wabenkörper nach Anspruch 1, 2, 3, 4, 5 oder 6, **dadurch gekennzeichnet**, daß der Mantel (41; 51) einen unregelmäßigen Querschnitt hat und die Blechstapel zumindest teilweise unterschiedliche Höhen haben und/oder zumindest teilweise unterschiedlich lange Bleche enthalten.

10. wabenkörper nach einem der Ansprüche 1 bis 6, **dadurch gekennzeichnet**, daß der Mantel (1; 31; 41; 51; 61; 71; 81; 91) aus einem nur 0,1 bis 1,5 mm, vorzugsweise etwa 1 mm dicken Blech besteht.

11. Wabenkörper nach einem der vorhergehenden Ansprüche, **dadurch gekennzeichnet**, daß einige der Blechlagen (3, 4) dicker sind als die übrigen oder aus einer Mehrzahl von aneinanderliegenden, gleich strukturierten Blechen bestehen.

12. Verfahren zur Herstellung eines Wabenkörpers mit einer Vielzahl von für ein Fluid durchlässigen Kanälen aus einer Vielzahl von zumindest teilweise strukturierten Blechen, **gekennzeichnet durch** folgende Merkmale:

a) eine Mehrzahl von Stapeln (8a, 8b, 8c, ...) aus jeweils einer Mehrzahl von zumindest teilweise strukturierten Blechen (3, 4) wird geschichtet;

b) jeder Stapel (8a, 8b, 8c, ...) wird um je eine Knicklinie (2a, 2b, 2c, ...) gefaltet und gleichzeitig oder anschließend mit seiner Faltungskante (9a, 9b, 9c, ...) zu einem Zentralbereich (5) hinbewegt;

c) die Enden der gefalteten Stapel (8a, 8b, 8c, ...) werden gleichsinnig umeinandergeschlungen, z. B. durch Drehen des Zentralbereichs (5) und Zusammenziehen eines die Stapel (8a, 8b, 8c, ...) umgebenden Formkörpers;

d) die verschlungenen Stapel (8a, 8b, 8c, ...) werden in einen vorgefertigten Mantel (1) geschoben bzw. mit einem solchen umgeben.

13. Verfahren nach Anspruch 12, **dadurch gekennzeichnet**, daß die Stapel (8a, 8b, 8c, ...) eine unterschiedliche Höhe und/oder unterschiedliche Längen der Bleche (3, 4) aufweisen.

14. Verfahren nach Anspruch 12 oder 13, **dadurch gekennzeichnet**, daß die Stapel (8a, 8b, 8c, ...) vor dem Falten zumindest teilweise einen parallelogrammförmigen, trapezförmigen oder unregelmäßigen Querschnitt aufweisen, indem Bleche entsprechender Länge seitlich versetzt aufeinander geschichtet werden.

## Claims

1. Honeycomb body having a multiplicity of channels through which a fluid can flow, in particular a catalyst carrier body, comprising a multiplicity of at least partly structured metal sheets (3, 4) which are arranged in a jacket (1; 31; 41; 51; 61; 71; 81; 91), **characterised in that** the honeycomb body contains at least three stacks (8a, 8b, 8c, ...) of metal sheets (3, 4), at least three of the stacks (8a, 8b, 8c, ...) being folded in each case about a respective associated bending line (2a, b, c; 32a, b, c; 42a, b, c; 52a, b, c, d; 62a, b, c, d; 72a, b, c, d; 82a, b, c; 92a, b, c, d) in the central region (5) of the honeycomb body, and being entwined in the folded state in the same direction about one another and about the central region (5) with the bending lines (2a, b, c; 32a, b, c; 42a, b, c; 52a, b, c, d; 62a, b, c, d; 72a, b, c, d; 82a, b, c; 92a, b, c, d).

2. Honeycomb body according to claim 1, **characterised in that** the honeycomb body contains four or more folded, entwined stacks (8a, 8b, 8c, ...).

3. Honeycomb body according to claim 1, **characterised in that**, in addition to the folded stacks, a non-folded stack (92) of metal sheets extending through the central region of the honeycomb body is present and is entwined together with the folded stacks.

4. Honeycomb body according to claim 1, 2 or 3, **characterised in that** each stack (8a, 8b, 8c, ...) consists of alternately arranged, substantially smooth (3) and corrugated (4) metal sheets.

5. Honeycomb body according to claim 1, 2, 3 or 4, **characterised in that** the metal sheets (3, 4) are connected together and/or to the jacket (1; 31; 41; 51; 61; 71; 81; 91) at least at some of the lines of contact by a joining technique, preferably by means of brazing.

6. Honeycomb body according to one of the preceding claims, **characterised in that** some or all of the lines of contact of the metal sheets are brazed at one or both of the end surfaces of the honeycomb body to a depth of several millimeters.

7. Honeycomb body according to one of the preceding claims, **characterised in that** the jacket (31) has a cross section approximately in the shape of a regular polygon, preferably a hexagon.

8. Honeycomb body according to one of the preceding claims, **characterised in that** all the metal sheets are of approximately the same length, but at least some are folded at different distances from their middle.

9. Honeycomb body according to claim 1, 2, 3, 4, 5 or 6, **characterised in that** the jacket (41; 51) has an irregular cross section, and at least some of the stacks of metal sheets have different heights and/or contain at least some metal sheets of different lengths.

10. Honeycomb body according to one of claims I to 6, **characterised in that** the jacket (1; 31; 41 ; 51; ; 71; 81; 91) consists of a metal sheet only 0.1 to 1.5 mm thick, preferably approximately 1 mm thick.

11. Honeycomb body according to one of the preceding claims, **characterised in that** some of the metal sheet layers (3, 4) are thicker than the others or consist of a plurality of identically structured metal sheets resting one on another.

12. Method for manufacturing a honeycomb body having a multiplicity of channels through which a fluid can flow, consisting of a multiplicity of at least partly structured metal sheets, **characterised by** the following features:

a) a plurality of stacks (8a, 8b, 8c, ...) each consisting of a plurality of at least partly structured metal sheets (3, 4) are disposed in layers;

b) each stack (8a, 8b, 8c, ...) is folded about a respective bending line (2a, 2b, 2c, ...) and, at the same time or subsequently, is moved by its folding edge (9a, 9b, 9c, ...) towards a central region (5);

c) the ends of the folded stacks (8a, 8b, 8c, ...) are intertwined with each other in the same direction, for example, by rotation of the central region (5) and contraction of a moulded body surrounding the stacks (8a, 8b, 8c, ...);

d) the entwined stacks (8a, 8b, 8c, ...) are pushed into a prefabricated jacket (1) or are surrounded by such a jacket.

13. Method according to claim 12, **characterised in that** the stacks (8a, 8b, 8c, ...) are of different heights and/or have different lengths of metal sheets (3, 4).

14. Method according to claim 12 or 13, **characterised in that**, before folding, at least some of the stacks (8a, 8b, 8c, ...) have a parallelogram-shaped, trapezoidal or irregular cross section, due to metal sheets of corresponding lengths being disposed laterally offset one above another in layers.

## Revendications

1. Corps à nid d'abeilles comprenant un grand nombre de canaux dans lesquels peut passer un fluide, notamment support de catalyseur, constitué d'une multiplicité de tôles ( 3, 4 ) au moins partiellement structurées et disposées dans une enveloppe (1 ; 31 ; 41 ; 51 ; 61 ; 71 ; 81 ; 91), caractérisé en ce que le corps à nid d'abeilles comporte au moins trois piles (8a, 8b, 8c, ...) de tôles (3,4), au moins trois des piles (8a, 8b, 8c, ...) étant respectivement pliées autour d'une ligne de pliage associée (2a, b, c ; 32a, b, c ; 42a, b, c ; 52a, b, c, d ; 62a, b, c, d ; 72a, b, c, d ; 82a, b, c ; 92a, b, c, d) dans la partie centrale (5) du corps à nid d'abeilles et étant entre-enroulées à l'état plié les unes autour des autres dans le même sens et autour de la partie centrale (5) présentant les lignes de pliage (2a, b, c ; 32a, b, c ; 42a, b, c ; 52a, b, c, d ; 62a, b, c, d ; 72a, b, c, d ; 82a, b, c ; 92a, b, c, d).

2. Corps à nid d'abeilles suivant la revendication 1, caractérisé en ce que le corps à nid d'abeilles comporte quatre ou plus de quatre piles (8a, 8b, 8c, ...) pliées et entre-enroulées.

3. Corps à nid d'abeilles suivant la revendication 1, caractérisé en ce qu'en plus des piles pliées, il est prévu une pile (92) de tôles non pliées s'étendant dans la partie centrale du corps à nid d'abeilles et entre-enroulées avec les piles pliées.

4. Corps à nid d'abeilles suivant la revendication 1, 2 ou 3, caractérisé en ce que chaque pile (8a, 8b, 8c, ... ) est constituée de tôles sensiblement planes (3) et ondulées ( 4 ) disposées en alternance.

5. Corps à nid d'abeilles suivant la revendication 1, 2, 3 ou 4, caractérisé en ce que les tôles (3, 4) sont reliées entre elles et/ou à l'enveloppe (1 ; 31 ; 41 ; 51 ; 61 ; 71 ; 81 ; 91) au moins sur une partie des lignes de contact, par une technique de jointoiement, de préférence par brasage fort.

6. Corps à nid d'abeilles suivant l'une des revendications précédentes, caractérisé en ce que les lignes de contact des tôles sont brasées en tout ou partie à l'un ou aux deux côtés frontaux du corps à nid d'abeilles, jusqu'à une profondeur de quelques millimètres.

7. Corps à nid d'abeilles suivant l'une des revendications précédentes, caractérisé en ce que l'enveloppe (31) présente, en section transversale, sensiblement la forme d'un polygone régulier, de préférence d'un hexagone.

8. Corps à nid d'abeilles suivant l'une des revendications précédentes, caractérisé en ce que toutes les tôles ont à peu près la même longueur, mais sont pliées, au moins partiellement, à une distance différente de leur milieu.

9. Corps à nid d'abeilles suivant la revendication 1, 2, 3, 4, 5 ou 6, caractérisé en ce que l'enveloppe (41 ; 51) présente une section transversale irrégulière et les piles de tôles ont, au moins partiellement, des hauteurs différentes et/ou comportent au moins partiellement des tôles de longueurs différentes.

10. Corps à nid d'abeilles suivant l'une des revendications 1 à 6, caractérisé en ce que l'enveloppe (1 ; 31 ; 41 ; 51 ; 61 ; 71 ; 81 ; 91) est en une tôle d'une épaisseur de 0,1 à 1,5 mm seulement et, de préférence, de 1 mm environ.

11. Corps à nid d'abeilles suivant l'une des revendications précédentes, caractérisé en ce que certaines des couches de tôle (3, 4) sont plus épaisses que les autres, ou sont constituées de plusieurs tôles superposées et structurées de la même façon.

12. Procédé de fabrication d'un corps à nid d'abeilles, ayant une multiplicité de canaux dans lesquels peut passer un fluide et constitué d'une multiplicité de tôles au moins partiellement structurées, remarquable par les caractéristiques suivantes :

a) on superpose plusieurs piles (8a, 8b, 8c, ...) constituées chacune de plusieurs tôles (3, 4), au moins partiellement structurées ;

b) on plie chaque pile (8a, 8b, 8c, ...) autour d'une ligne de pliage 2a, 2b, 2c, ...) et on la déplace en même temps ou ultérieurement en amenant sa pliure (9a, 9b, 9c, ...) vers une partie centrale (5) ;

c) on entre-enroule, dans le même sens les unes autour des autres, les extrémités des piles (8a, 8b, 8c, ...) pliées, par exemple en faisant tourner la partie centrale (5), et en faisant se rétracter une pièce conformée entourant les piles (8a, 8b, 8c, ...) ;

d) on pousse les piles (8a, 8b, 8c, ...) entre-enroulées dans une enveloppe (1) préfabriquée où on les entoure d'une telle enveloppe.

13. Procédé suivant la revendication 12, caractérisé en ce que les piles (8a, 8b, 8c, ...) présentent une hauteur différente et/ou ont des tôles (3, 4) d'une longueur différente.

14. Procédé suivant la revendication 12 ou 13, caractérisé en ce que les piles (8a, 8b, 8c, ...) présentent, avant le pliage, une section transversale au moins partiellement en forme de parallélogramme de trapèze ou irrégulière, du fait que des tôles de longueur adéquate sont superposées les unes aux autres avec un décalage latéral.

FIG 1

FIG 2

FIG 3

FIG 4

FIG 5

FIG 6

FIG 7

FIG 8

FIG 9